# EUROPEAN PATENT APPLICATION

(11) **EP 2 543 848 A1**
(43) Date of publication of application: **09.01.2013**
(21) Application number: 12250130.7
(22) Date of filing: 04.07.2012
(51) Int. Cl.: F02B 51/04, F02B 51/06, B01J 19/12, C10G 32/02, F02M 27/04, H05B 6/64

(54) **Fuel delivery**

(30) Priority: 07.07.2011 GB 201116142
(71) Applicant: Power Nova Limited, Stafford ST17 4SL (GB)
(72) Inventor: Davidson, Colin Charnock, Stafford, ST17 4SL (GB); Canelhas, Andre Paulo, Stafford, ST17 4SL (GB); Ferry, Graham Alan, Stafford, ST17 4SL (GB); Dawson, Francis Hugh, Stafford, ST17 4SL (GB)
(74) Representative: Sales, Robert Reginald

(57) **Abstract**

A micro generation system 10. The system 10 including an external combustion engine in the form of a Stirling engine 12 which uses the heat generated by a burner 14. Biofuel for the burner 14 prior to supply thereto, is mixed with air and enters a first microwave heating chamber 26 where the temperature of the biofuel and air mixture is raised by microwave radiation.

## Description

The present invention relates to a method of fuel delivery, and particularly fuel delivery to an external combustion engine, an apparatus for delivering fuel utilising such a method, and a power generating system utilising such an apparatus.

In recent years there has been a trend away from relatively large scale centralised electricity generation in which electricity is produced at a central location and distributed to individual homes, towards smaller scale "micro generation", in which electricity is produced by individual users.

One fuel source for such micro generation system is biofuel. Bio-fuels are produced from biomass and include for example bioethanol and vegetable oils (i.e. "biodiesel"), or a mixture thereof. Micro generation systems may burn biofuels in either an internal combustion engine or an external combustion engine. Since biofuels are produced from biomass, they are considered renewable, and their use does not lead to a net increase in atmospheric carbon dioxide emissions. Such fuels are usually therefore considered "green".

In this specification, the term "external combustion engine" refers to heat engines in which an (internal) working fluid is heated by combustion of an external source, through the engine wall or a heat exchanger. The fluid then by expanding and acting on the mechanism of the engine, produces motion and usable work. Such external combustion engines include for instance Brayton cycle engines and Stirling cycle engines.

Difficulties are often however encountered in efficiently burning biofuel, as such fuels may be of inconsistent quality due to natural variation. Furthermore, such fuels may include relatively high water content. In view of these features, such fuels are often not suitable for use in internal combustion engines.

According to a first aspect of the present invention there is provided a fuel delivery method for delivering fuel to an external combustion engine, the fuel comprising biofuel, the method comprising exposing the fuel to microwave radiation such that the fuel is at least partially vapourised, and subsequently delivering the at least partially vapourised fuel to an external combustion engine.

The fuel may be a liquid fuel and may comprise biodiesel, bioethanol or a mixture thereof.

The external combustion engine may comprise a Brayton cycle engine or may comprise a Stirling cycle engine. The external combustion engine may provide power to an electrical generator, and may also provide heat to a hot water system, and / or a space heating system. The external combustion engine may be of a reversible type, in which the engine can be used as a heat pump powered by an external source such as an electric motor.

The method may comprise exposing the fuel to microwave radiation having a frequency of between 2 GHz and 3 GHz, and preferably having a frequency of between 2.4 GHz and 2.5 GHz, and more preferably having a frequency of approximately 2.45 GHz.

According to a second aspect of the present invention there is provided fuel delivery apparatus for delivering a fuel comprising biofuel to an external combustion engine, the apparatus including a chamber and a microwave radiation source for exposing the fuel in the chamber to microwave radiation such that the fuel is at least partially vapourised, in the at least partially vapourised fuel being subsequently delivered to an external combustion engine.

The microwave radiation source may be at least partly enclosed by an enclosure comprising an electrically conductive outer wall, which outer wall may enclose an electrically insulating inner wall. The outer wall may comprise a screen of conductive material, and a mesh of conductive material may be provided extending across an inlet and outlet of the chamber. The inner wall may comprise an electrically insulating material, and may comprise any of a polymer, thermoset resin, ceramic or fibre reinforced composite.

According to a third aspect of the present invention, there is provided a system for providing electrical power, the system comprising an external combustion engine and a fuel delivery apparatus according to either of the preceding two paragraphs.

The system may include a burner for burning the biofuel and providing heat to the external combustion engine. The system may further comprise a fuel supply means for supplying biofuel to the chamber, which fuel supply means may be arranged to supply a second fuel directly to the burner. The second fuel may be natural gas. The fuel supply means may include a fuel tank for storing biofuel, and may include a fuel pump for delivering the biofuel to the chamber.

The system may further include an air supply means for delivering air to the chamber and mixing the biofuel with air to produce a biofuel / air mixture. The system may further include a turbo compressor for compressing the vapourised biofuel / air mixture from the chamber before delivery to the burner.

The system may include an emission controller for controlling the emissions produced by the burner. The system may further include an electrical generator, which may be operably connected to the external combustion engine, and may provide power to one or more electrical outlets.

The system may further comprise a backup electricity source, which backup electricity source may comprise mains electricity. Alternatively or in addition, the backup electricity source may comprise a renewable energy source such as a wind or a photoelectric generator.

The system may provide both electrical power and heating, and may provide space and water heating. Where the system provides both electrical power and heating, the system further includes a heat accumulator for storing waste heat from the external combustion engine, which heat accumulator may comprise a hot water tank.

The system may further comprise a controller to control the operation of the system.

An embodiment of the present invention will now be described by way of example only with reference to the accompanying drawings, in which:
Fig. 1 is a flow diagram of a micro-generation system including an apparatus in accordance with the present invention;
Fig. 2 is a cross sectional view of part of an apparatus in accordance with the invention; and
Fig. 3 is a similar view to Fig. 2 of a second apparatus in accordance with the invention.

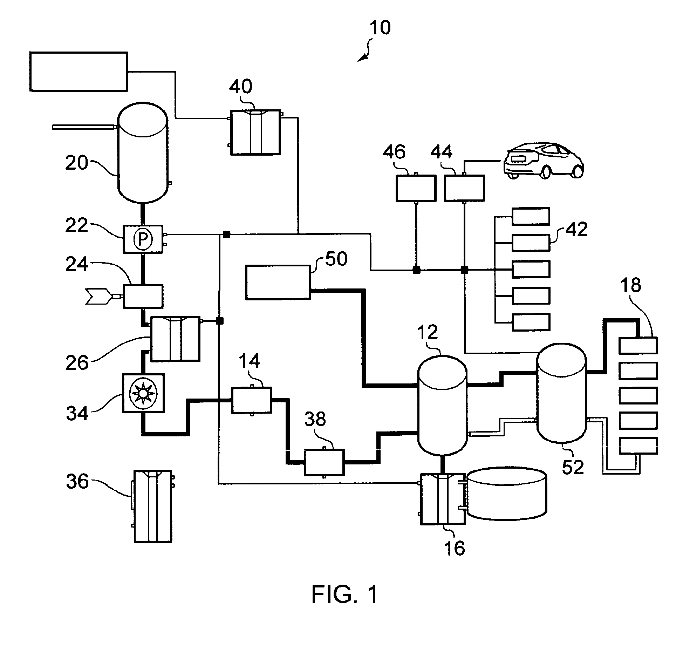

Fig. 1 shows a micro-generation system 10 for providing hot water, space heating and electrical power. The system 10 is particularly suitable for buildings having relatively small energy requirements such as homes.

The system 10 includes an external combustion engine in the form of a Stirling engine 12. The Stirling engine 12 uses heat generated by a burner 14 to produce mechanical power for an electrical generator 16. The burner 14 also provides heat to radiators 18 and a water heater via a header tank 52. The burner 14 is in the form of a conventional natural gas burner of the type suitable for use in a domestic boiler.

Fuel in the form of biofuel such as biodiesel, bioethanol or a mixture thereof is provided to the burner 14 from a biofuel tank 20 via a fuel pump 22. The biofuel is mixed with air supplied by an air intake 24 and enters a first microwave heating chamber 26 including a microwave generator 28. The temperature of the biofuel / air mixture is raised in the chamber 26 by microwave radiation and the biofuel is partially or wholly vapourised. Further details of the heating chamber are provided below.

The vapourised biofuel / air mixture is pressurised by a turbo compressor 34 and fed into the burner 14 where the biofuel air mixture is burnt to produce hot exhaust gases. The exhaust gases are passed through an emission controller 38 to provide control data to adjust the process to optimise combustion, and then passed to the Stirling heat engine 12.

The system is controlled by a system controller 36 which controls operation of the components of the system. The controller's primary function is adjusting fuel injection to cope with the energy output. The controller may use temperature and pressure readings and electrical power output to regulate the amount of fuel injected in the burner, subject to detailed optimisation of the thermodynamic arrangement.

Electrical energy for the fuel pump 22, microwave generator 28, turbo compressor 34, and system controller 36 is provided by the electrical generator 16 while the system 10 is running. To start the system 10 and to provide power should the electrical generator 16 fail, electrical power is provided from a mains electricity supply 40. To provide further backup electrical power, or to further reduce the carbon emissions of the system, further electrical power may be provided by renewable electrical generators 46 such as a wind turbine or photovoltaic panel.

A backup fuel supply 50 of natural gas from a mains supply is also provided to provide fuel if required for the burner 14. Electrical power from the generator 16, mains electrical supply 40 and renewable electricity generators 46 is provided to electrical sockets 42 or a vehicle charging station 44.

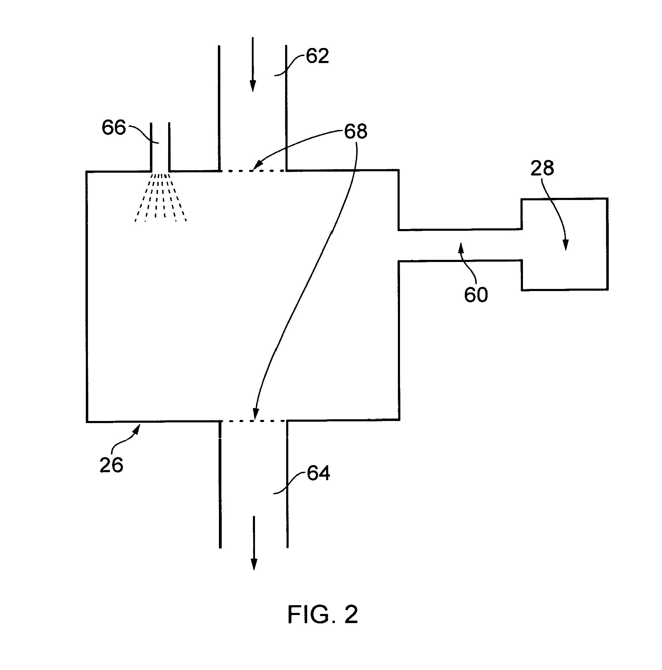

The first heating chamber 26 is shown in more detail in Fig. 2. The chamber 26 has an air inlet 62, an air/fuel outlet 64, a microwave generator 28 which may be coupled to the chamber 26 by a waveguide 60 and a fuel injector 66 is provided. The outer wall 30 of the chamber 26 is made of sheet metal to act as a Faraday cage to prevent microwave radiation from leaking from the heating chamber, which might otherwise cause damage to other components of the system, and may also pose a health risk to nearby persons. Wire mesh screens 68 are provided across the inlet 62 and outlet 64 to maintain the Faraday cage.

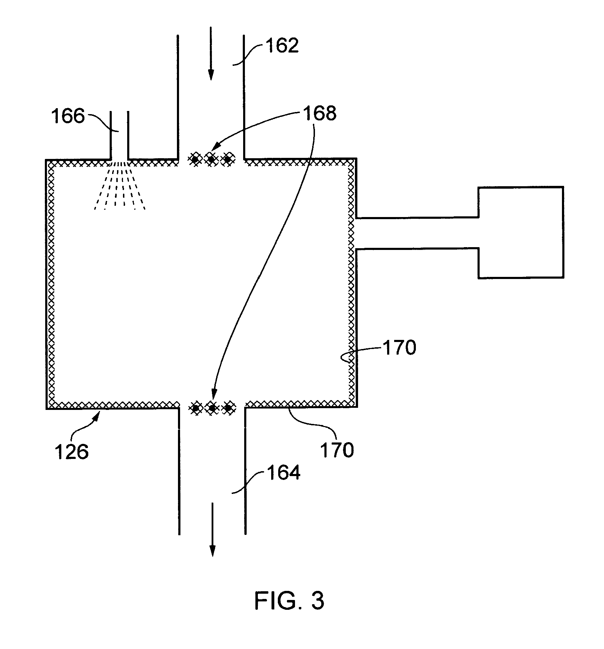

Fig. 3 shows a second heating chamber 126 which is similar to the chamber 26 except as follows. In this instance an insulating layer 170 is provided on the inside of the chamber 126. The layer 170 is of an electrically insulating material such as a polymer, thermoset resin, ceramic or fibre reinforced concrete which is essentially transparent at microwave frequencies. The mesh 168 extending across the inlet 162 and outlet 164, is provided by an insulated wire which is electrically bonded to the cage 126.

With the second chamber 126 there is improved safety in avoiding an explosion risk if for instance metal particles such as swarf in the fuel could spark with the conducting outer wall 130 of the enclosure. If required the insulating layer 170 could also extend across the microwave generator 128.

In use, a biofuel from the fuel tank 20 is provided to the fuel pump 22. On starting, power for the fuel pump 22, turbo compressor 34 and microwave generator 26 is provided from the backup power sources (i.e. the mains supply 40 or renewable electricity generators 46). Once started, power for these items is then provided by the electrical generator 16. The air from the air intake 24 enters the chamber 26 via an inlet 62. The biofuel enters the chamber 26 in the form of a spray via a fuel injector 166. The temperature of the biofuel / air mixture inside the chamber is then raised by the microwave radiation produced by the microwave generator, and the biofuel component is vapourised or partially vapourised. The vapourised fuel then exits the heating chamber through an outlet 64 and flows to the turbo-compressor 34, in which the biofuel / air mixture is compressed.

The compressed biofuel / air mixture is burnt in the burner 14, and the burnt gasses are passed through the emission controller 38. The hot burnt gases then flow to the Stirling engine 12, and the heat from the gases is used to provide mechanical power and waste heat. The mechanical power is used to power the electrical generator 16, which provides electricity to the electrical sockets 42 or the vehicle charging station 44. The waste heat is stored in the header tank 52, and used to heat the radiators 18.

By utilising microwave energy to at least partially vapourise the fuel, a higher degree of control can be provided over the fuel vapourisation, which is particularly advantageous where relatively inconsistent fuel sources such as bio-fuel are used. The process is also more efficient. Using microwave energy rather than other heat sources to vapourise the fuel is more efficient, as most of the microwave energy is absorbed directly by the fuel, rather than heating for instance the walls of the heating chamber. The fuel is then utilised in an external combustion engine which is well adapted for utilising such variable quality fuels.

Biofuels have also been found to be highly suitable for such microwave heating, due to their strong microwave absorption properties. This has been found to result at least partly from the relatively high water content of such fuels. In addition, the polar character of the molecular structure of both alcohols (caused by hydroxyl, -OH, group) and fatty acid (caused by the carboxyl, COOH, group) results in high microwave absorption in comparison with traditional mineral-based fuels. The fuel combination of biodiesel and bioethanol has been found to be particularly suitable for this method.

Various advantages are provided by the described invention. The method enables efficient combustion of a wide range of fuels, including biofuels, which would otherwise be difficult to burn efficiently in view of their variable quality. This method can be used in a system which reliably provides power from a range of sources under a range of conditions, while producing relatively few greenhouse gases in view of the use of biofuels.

Various modifications may be made without departing from the scope of the invention. For instance, any type of external combustion cycle could be used in place of the Stirling engine. For instance, a Brayton cycle (i.e. gas turbine engine) could be used instead. The method could also be used to provide power for other purposes, such as for automobiles.

The external combustion engine could be of a reversible type, in which the engine can be used as a heat pump powered by an external source such as an electric motor. Such an arrangement could thereby provide both heating and cooling. When operated as a heat pump, the heat engine could be powered by an electric motor operating from mains electricity or renewable energy such as wind turbines or photovoltaic panels.

Different materials could be used for the inner and outer walls of the heating chamber.

Whilst endeavouring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. A fuel delivery method for delivering fuel to an external combustion engine, the fuel comprising biofuel, the method comprising exposing the fuel to microwave radiation such that the fuel is at least partially vapourised, and subsequently delivering the vapourised fuel to an external combustion engine.

2. A method according to claim 1 **characterised in that** the fuel is a liquid fuel, and may comprise biodiesel, bioethanol or a mixture thereof.

3. A method according to claims 1 or 2, **characterised in that** the external combustion engine comprises one of a Brayton cycle engine or a Stirling cycle engine.

4. A method according to any of the preceding claims, **characterised in that** the external combustion engine may provide power to an electrical generator; may provide heat to a hot water system, and / or a space heating system; and/or may be of a reversible type, in which the engine can be used as a heat pump powered by an external source such as an electric motor.

5. A method according to any of the preceding claims, **characterised in that** the method comprises exposing the fuel to microwave radiation having a frequency of between 2 GHz and 3 GHz, and perhaps between 2.4 GHz and 2.5 GHz, and perhaps having a frequency of approximately 2.45 GHz.

6. Fuel delivery apparatus for delivering a fuel comprising biofuel to an external combustion engine, the apparatus including a chamber and a microwave radiation source for exposing the fuel in the chamber to microwave radiation such that the fuel is at least partially vapourised, wherein the fuel comprises biofuel, the at least partially vapourised fuel being subsequently delivered to an external combustion engine.

7. An apparatus according to claim 6, **characterised in that** the microwave radiation source is at least partly enclosed by an enclosure comprising an electrically conductive outer wall, the outer wall may comprise a screen of conductive material, and a mesh of conductive material may be provided across an inlet and outlet of the chamber.

8. An apparatus according to claim 7, **characterised in that** the electrically conductive outer wall at least partly encloses an electrically insulating inner wall, and the inner wall may comprise a polymer, thermoset resin, ceramic or fibre reinforced composite.

9. A system for providing electrical power, the system comprising an external combustion engine and a fuel delivery apparatus according to any of claims 6 to 8.

10. A system according to claim 9, **characterised in that** the system includes a burner for burning the biofuel and providing heat to the external combustion engine.

11. A system according to claims 9 or 10, **characterised in that** the system further comprises a fuel supply means for supplying biofuel to the chamber, the fuel supply means may be arranged to supply a second fuel directly to the burner,the second fuel may be natural gas, and the fuel supply means may include a fuel tank for storing biofuel, and may include a fuel pump for delivering the biofuel fuel to the chamber.

12. A system according to any of claims 9 to 11, **characterised in that** the system further includes an air supply means for delivering air to the chamber and mixing the biofuel with air to produce a biofuel / air mixture, and the system may further include a turbo compressor for compressing the vapourised biofuel / air mixture from the chamber before delivery to the burner.

13. A system according to claim 10 or any claim dependent thereon, **characterised in that** the system includes an emission controller for controlling the emissions produced by the burner, and the system may comprise a controller to control the operation of the system.

14. A system according to any of claims 9 to 13, **characterised in that** the system further includes an electrical generator, which generator is operably connected to the external combustion engine, the system may further comprise a backup electricity source, and the backup electricity source may comprise mains electricity, and the backup electricity source may comprise a renewable energy source such as a wind or photoelectric generator.

15. A system according to any of claims 9 to 14, **characterised in that** the system may provide both electrical power and heating, may provide space and water heating, and may include a heat accumulator for storing waste heat from the external combustion engine.
